# EUROPÄISCHE PATENTANMELDUNG

(11) **EP 3 671 285 A1**
(43) Veröffentlichungstag der Anmeldung: **24.06.2020**
(21) Anmeldenummer: 18215444.3
(22) Anmeldetag: 21.12.2018
(51) Int. Cl.: G01T 1/185, G01T 1/40, G01T 1/02

(54) **VORRICHTUNG ZUM MESSEN IONISIERENDER STRAHLUNG**

(71) Anmelder: Berthold Technologies GmbH & Co. KG, 75323 Bad Wildbad (DE)
(72) Erfinder: BERTHOLD, Fritz, 75173 Pforzheim (DE); BRIGGMAN, Jürgen, 72119 Ammerbuch (DE); FREIBURGER, Ewald, 75245 Neulingen (DE); REUTER, Wilfried, 75334 Straubenhardt (DE)
(74) Vertreter: Patentanwälte Ruff, Wilhelm, Beier, Dauster & Partner mbB

(57) **Zusammenfassung**

Die Erfindung bezieht sich auf eine Vorrichtung (1) zum Messen ionisierender Strahlung (IS), aufweisend:
- einen Detektor (2) aufweisend:
- eine Kathode (3),
- eine Anode (4),
- ein Zählgas (ZG) zwischen der Kathode (3) und der Anode (4) zum Erzeugen von Gasionisierung durch ionisierende Strahlung (IS),
- eine Spannungsquelle (5) zum Anlegen einer Spannung (U5) zwischen der Kathode (3) und der Anode (4), und
- eine Strommesseinrichtung (6) zum Messen eines im Zählgas (ZG) durch die ionisierende Strahlung (IS) erzeugten Detektorstroms (l6) zwischen der Kathode (3) und der Anode (4), und

- eine Einstelleinrichtung (7),
- wobei die Einstelleinrichtung (7) zum selbstständigen Einstellen der Vorrichtung (1) in unterschiedliche Betriebsarten (B1, B2, B3, B4) in Abhängigkeit von dem gemessenen Detektorstrom (l6) ausgebildet ist, und/oder
- wobei die Einstelleinrichtung (7) zum selbstständigen Einstellen der Vorrichtung (1) in der Betriebsart (B1) in unterschiedliche Messbereiche (Ma, Mb) in Abhängigkeit von dem gemessenen Detektorstrom (l6) ausgebildet ist.

## Beschreibung

### ANWENDUNGSGEBIET UND STAND DER TECHNIK

Die Erfindung bezieht sich auf eine Vorrichtung zum Messen ionisierender Strahlung.

Vorrichtungen zum Messen ionisierender Strahlung sind bekannt.

### AUFGABE UND LÖSUNG

Der Erfindung liegt als Aufgabe die Bereitstellung einer Vorrichtung zum Messen ionisierender Strahlung zugrunde, die gegenüber dem Stand der Technik verbesserte Eigenschaften aufweist, insbesondere einen einfachen und somit kostengünstigen Aufbau und zugleich einen, insbesondere flexiblen und/oder sicheren, Betrieb in Abhängigkeit von der Intensität der ionisierenden Strahlung ermöglicht.

Die Erfindung löst diese Aufgabe durch die Bereitstellung einer Vorrichtung mit den Merkmalen des Anspruchs 1. Vorteilhafte Weiterbildungen und/oder Ausgestaltungen der Erfindung sind in den abhängigen Ansprüchen beschrieben.

Die erfindungsgemäße Vorrichtung ist zum, insbesondere selbstständigen beziehungsweise automatischen, Messen ionisierender Strahlung ausgebildet beziehungsweise konfiguriert. Die Vorrichtung weist einen Detektor für ionisierende Strahlung und eine, insbesondere elektronische, Betriebsarteinstelleinrichtung auf. Der Detektor weist eine Kathodeneinrichtung, eine Anodeneinrichtung, ein Zählgas, eine, insbesondere elektrische, Spannungsquelle und eine, insbesondere elektronische, Strommesseinrichtung auf. Das Zählgas befindet sich räumlich angeordnet und/oder ausgebildet zwischen der Kathodeneinrichtung und der Anodeneinrichtung zum Erzeugen von freien Ladungsträgern, insbesondere Elektronen und positiven Ionen, durch Gasionisierung durch die einfallende, ionisierende Strahlung. Die Spannungsquelle ist zum, insbesondere selbstständigen beziehungsweise automatischen, Anlegen einer, insbesondere elektrischen, Spannung, insbesondere einer Gleichspannung, zwischen der Kathodeneinrichtung und der Anodeneinrichtung ausgebildet beziehungsweise konfiguriert. Die Strommesseinrichtung ist zum, insbesondere selbstständigen beziehungsweise automatischen, Messen eines durch Ionisation verursachten Detektorstroms zwischen der Kathodeneinrichtung und der Anodeneinrichtung ausgebildet beziehungsweise konfiguriert. Die Betriebsarteinstelleinrichtung ist zum selbstständigen beziehungsweise automatischen Einstellen der Vorrichtung in eine erste Betriebsart und in eine oder mehrere von der ersten verschiedenen, Betriebsarten in Abhängigkeit von dem gemessenen Detektorstrom ausgebildet beziehungsweise konfiguriert.

Die Vorrichtung, insbesondere ihre Betriebsarteinstelleinrichtung, ermöglicht einen, insbesondere flexiblen und/oder sicheren, Betrieb, insbesondere ohne eine Benutzerbetätigung und/oder -Bedienung, in Abhängigkeit von der ionisierenden Strahlung, insbesondere einer Strahlungsintensität der ionisierenden Strahlung, mit dem einen Detektor. Dies ermöglicht einen einfachen und somit kostengünstigen Aufbau der Vorrichtung.

Mit der erfindungsgemäßen Vorrichtung erreicht man mit einem einzigen Detektor einen sehr großen dynamischen Bereich, wie er nach dem Stand der Technik bisher nur mit mehreren Detektoren erreicht werden kann.

Die Vorrichtung ist so ausgebildet bzw. konfiguriert, dass sie gleichzeitig Alphastrahlung, Betastrahlung, Gamma- und/oder Röntgenstrahlung und/oder Neutronenstrahlung messen kann.

Weiter zusätzlich oder alternativ kann die Kathodeneinrichtung nur eine einzige Kathode aufweisen. In anderen Worten: die Kathodeneinrichtung braucht oder kann nicht mehrere Kathoden aufweisen.

Weiter zusätzlich oder alternativ kann die Anodeneinrichtung nur eine einzige Anode oder mehrere, insbesondere elektrisch parallel geschaltete, Anoden aufweisen. Insbesondere kann die Anodeneinrichtung mindestens einen Anodendraht aufweisen.

Weiter zusätzlich oder alternativ kann der Detektor als gasgefüllter Detektor bezeichnet werden. Weiter zusätzlich oder alternativ kann das Zählgas Argon, Methan, CO2 und/oder Isobutan und/oder luftäquivalentes Gas aufweisen oder sein.

Die ionisierende Strahlung erzeugt im Gas freie Ladungsträger. In einer Ionisationskammer entspricht dieser Strom dem aus dem Detektor fließenden Strom, dem Detektorstrom. Bei einem Proportionalzähler wird der primär erzeugte lonisationsstrom durch Gasverstärkung verstärkt und erhöht damit den Detektorstrom um den sog. Gasverstärkungsfaktor. Durch diese Gasverstärkung wird die Messempfindlichkeit wesentlich erhöht.

Eine erfindungsgemäße Vorrichtung ohne Gasverstärkung wird als Ionisationskammer bezeichnet. Beim Betrieb mit Gasverstärkung spricht man von einem Zählrohr.

Bei gasgefüllten Detektoren unterscheidet man zwischen Ionisationskammern, Proportionalzählrohren und Geiger- Müller- Zählrohren. Geiger- Müller- Zählrohre werden hier nicht in Betracht gezogen.

Gasgefüllte Detektoren können in verschiedenen Betriebsarten, nachfolgend als B1-B4 bezeichnet, betrieben werden.
1. Ionisationskammer mit Gasverstärkung (identisch mit Proportionalzählrohr mit Strommessung) (B1)
2. Ionisationskammer ohne Gasverstärkung (B2)
3. Proportionalzählrohr, Betrieb mit Integraldiskriminator und Normimpulsausgang, Hochspannungseinstellung im Plateau (B3)
4. Proportionalzählrohr mit Impulshöhenmessung (B4)

Erfindungsgemäß werden die Umschaltungen zwischen den Betriebsarten oder den Messbereichen innerhalb der Betriebsart B1 allein durch den gemessenen Detektorstrom ausgelöst.

Eine Anwendung der Erfindung bezieht sich auf den Einsatz derartiger Detektoren zur Dosisleistungsmessung. Hier geht man bei der vorliegenden Erfindung von der Messung des Detektorstromes mit oder ohne Gasverstärkung aus. Der wesentliche Vorteil der Strommessung mit Gasverstärkung liegt dabei in der hohen Messempfindlichkeit kombiniert mit einem großen dynamischen Bereich. Ist der Gasverstärkungsfaktor n, so ist der Detektorstrom um denselben Faktor n höher als beim Betrieb ohne Gasverstärkung.

Dies ist allerdings mit Nachteilen verbunden:
1. Die zum dynamischen Bereich beitragenden Messbereiche müssen kalibriert sein.
2. Die Strommessung ist gegenüber einer Ionisationskammer wesentlich empfindlicher auf Veränderung des Arbeitspunktes beispielsweise durch Temperaturänderung, Änderung der Gasverstärkung oder Alterung.

Die Erfindung beseitigt die geschilderten Nachteile des Standes der Technik.

Dazu werden verschiedene Messbereiche vorkonfiguriert (kalibriert). Die Auswahl des optimalen Messbereiches erfolgt dann automatisch über den gemessenen Detektorstrom.

Diese Vorkonfiguration kann in folgender Weise vorgenommen werden:
Eine radioaktive Referenzquelle in definierter Position zum Detektor erzeugt im Detektor einen Detektorstrom.

### Kalibrierung:

Zur Einstellung des Arbeitspunktes kann man in Gegenwart der Referenzquelle die Hochspannung schrittweise oder kontinuierlich verändern und (gleichzeitig) dabei die elektronische Verstärkung derart anpassen bzw. nachstellen, dass ein gewählter Referenzstrom konstant bleibt. Ebenso kann man die elektronische Verstärkung schrittweise oder kontinuierlich verändern und die Hochspannung derart verändern bzw. nachstellen, dass ein gewählter Referenzstrom konstant bleibt. Der dabei ermittelte funktionale Zusammenhang zwischen elektronischer Verstärkung und Hochspannung wird (als Liste oder Kurve) abgespeichert. Mit dieser Methode erhält man beliebig viele kalibrierte Messbereiche. (Die Grenze ist dadurch gegeben, dass bei der sicherlich nicht überdosierten Referenzquelle der Detektorstrom bei niedrigen Hochspannungswerten, also niedriger Gasverstärkung, immer eine größere Ungenauigkeit aufweist.)

### Messung:

Bei der eigentlichen Messung wählt man vorzugsweise einen Verstärkungswert aus der Liste aus, dann wird der dazugehörige Hochspannungswert automatisch eingestellt und die MessEmpfindlichkeit ist gegenüber dem ursprünglichen Wert der Verstärkung (bezogen auf einen Referenzwert) um den Faktor der elektronischen Verstärkung verändert, d.h. dieser Verstärkungswert entspricht einem Empfindlichkeitswert, den man alternativ aus der Liste entnehmen und eingeben könnte. Natürlich könnte man auch den Hochspannungswert eingeben und die elektronische Verstärkung würde automatisch nachgestellt. Während der Messung erfolgt dann eine automatische Empfindlichkeitswahl in Abhängigkeit vom gemessenen Detektorstrom.

Vorteilhafterweise arbeitet man mit einer möglichst hohen Gasverstärkung, um einen optimalen Signal-Rauschabstand zu erhalten. Andererseits darf die Gasverstärkung nicht so hoch werden, dass der eigentliche Proportionalbereich verlassen wird. Die Verringerung der Gasverstärkung zur Messbereichsumschaltung erfolgt zur Vermeidung von Übersteuerungseffekten des Zählrohres bei hoher Strahlungsintensität.

Das Vorgenannte gilt analog, wenn statt des Referenzstromes ein Referenzspektrum oder eine davon abgeleitete Größe verwendet wird. Bei der Kalibrierung mit Hilfe von geeigneten Eigenschaften eines Referenzspektrums muss im Gegensatz zur Verwendung des Referenzstromes keine Zerfallskompensation bedingt durch den radioaktiven Zerfall des Referenzstrahlers entsprechend der Halbwertszeit des verwendeten Radioisotops vorgenommen werden.

Weiter zusätzlich oder alternativ kann die Vorrichtung als Messgerät, insbesondere als Strahlenschutzmessgerät, bezeichnet werden. Weiter zusätzlich oder alternativ kann die Vorrichtung im Bereich des Strahlenschutzes verwendet beziehungsweise angewendet werden.

In einer Weiterbildung der Erfindung ist die Betriebsarteinstelleinrichtung zum selbstständigen Einstellen der Vorrichtung, insbesondere von einem Messbereich der ersten Betriebsart in einen anderen Messbereich der ersten Betriebsart oder in die zweite Betriebsart bei Erreichung oder Überschreitung eines Stromgrenzwerts durch den gemessenen Detektorstrom ausgebildet. Zusätzlich oder alternativ ist die Betriebsarteinstelleinrichtung zum selbstständigen Einstellen der Vorrichtung, insbesondere von der zweiten Betriebsart B2, in einen Messbereich der ersten Betriebsart B1 bei Unterschreitung eines zweiten Stromgrenzwerts durch den Detektorstrom ausgebildet.

Um zu häufiges Umschalten zwischen den Messbereichen oder Betriebsarten zu vermeiden, kann eine Hysterese vorgesehen werden.

Somit ermöglicht die Vorrichtung eine hohe Messempfindlichkeit mit einem großen dynamischen Messbereich und Übersteuerungsfestigkeit und somit einen flexiblen und sicheren Betrieb.

Insbesondere kann der erste Spannungswert derart sein, dass die Vorrichtung im Proportionalbereich arbeiten kann. Im Detail kann die Vorrichtung im Proportionalbereich zwar keine Messung einer hohen Strahlungsintensität, jedoch eine Messung mit einer hohen Empfindlichkeit ermöglichen.

Zusätzlich oder alternativ kann der zweite Spannungswert derart sein, dass die Vorrichtung als Ionisationskammer arbeiten kann. Im Detail kann die Vorrichtung als Ionisationskammer zwar keine Messung mit einer hohen Empfindlichkeit, jedoch eine Messung einer hohen Strahlungsintensität ermöglichen.

Weiter zusätzlich oder alternativ kann die Betriebsarteinstelleinrichtung zum selbstständigen, insbesondere schritt- beziehungsweise stufenweisen, Einstellen der Spannungsquelle auf einen minimalen Spannungswert, insbesondere ohne Gasverstärkung, auf einen maximalen Spannungswert mit maximaler Gasverstärkung und/oder auf mindestens einen mittleren Spannungswert zwischen dem minimalen Spannungswert oder dem maximalen Spannungswert in Abhängigkeit von dem gemessenen Detektorstrom ausgebildet sein. Insbesondere kann ein mittlerer Spannungswert derart niedriger als der maximale Spannungswert oder ein eventueller nächst höherer mittlerer Spannungswert sein, dass eine mittlere Gasverstärkung um einen Faktor 5-20, insbesondere 10, niedriger als die maximale Gasverstärkung oder eine eventuelle nächst höhere mittlere Gasverstärkung sein kann. Somit kann der Detektor beziehungsweise die Vorrichtung einen großen dynamischen Messbereich mit einer guten Messauflösung beziehungsweise Messempfindlichkeit beziehungsweise mehrere Messbereiche jeweils mit einer geeigneten Messauflösung beziehungsweise Messempfindlichkeit ermöglichen.

Weiter zusätzlich oder alternativ kann die Betriebsarteinstelleinrichtung zum selbstständigen Einstellen der Spannungsquelle auf den zweiten Spannungswert, insbesondere von dem ersten Spannungswert, bei Erreichung oder Überschreitung des ersten Stromgrenzwerts durch den gemessenen Detektorstrom, insbesondere bei dem ersten Spannungswert, ausgebildet sein. Zusätzlich oder alternativ kann die Betriebsarteinstelleinrichtung zum selbstständigen Einstellen der Spannungsquelle auf den ersten Spannungswert, insbesondere von dem zweiten Spannungswert, bei Unterschreitung des zweiten Stromgrenzwerts durch den gemessenen Detektorstrom, insbesondere bei dem zweiten Spannungswert, ausgebildet sein.

Beim Übergang von B1 in B2 muss die Hochspannung mindestens so weit reduziert werden, dass keine Gasverstärkung mehr erfolgt. Jedoch ist die Gefahr von starker Raumladungsbildung und Rekombination umso höher, je niedriger die Spannung ist.

Erfindungsgemäß kann die Messung des lonisationsstromes bei Polaritätsumkehr zwischen Anode und Kathode erfolgen, d.h. der oder die Zähldrähte sind die Kathode, die Zählrohrwand die Anode.

In dieser Konfiguration kann auch bei hohen Spannungen keine Gasverstärkung erfolgen, da die auf die Wand zulaufenden Elektronen keine Gasmultiplikation auslösen können, d.h. man hat einen lonisationskammerbetrieb bei hohen Spannungen mit minimaler Rekombinationsgefahr. Damit wird der dynamische Bereich zu hohen Strahlungsintensitäten hin vergrößert. Dies gilt insbesondere auch bei der Messung gepulster Strahlung.

In einer Weiterbildung der Erfindung weist die Vorrichtung eine, insbesondere elektrische, Stromimpulsmesseinrichtung und eine, insbesondere die und/oder elektrische, Bestimmungseinrichtung auf. Die Stromimpulsmesseinrichtung ist zum, insbesondere selbstständigen beziehungsweise automatischen, Messen von Höhen, insbesondere von Höhenwerten der Höhen, von lonisationsstromimpulsen zwischen der Kathodeneinrichtung und der Anodeneinrichtung und/oder auf den lonisationsstromimpulsen basierenden Signalstromimpulsen ausgebildet beziehungsweise konfiguriert. Die Bestimmungseinrichtung ist zum, insbesondere selbstständigen beziehungsweise automatischen, Bestimmen einer, insbesondere der, Eigenschaft, insbesondere eines Eigenschaftswerts der Eigenschaft, der ionisierenden Strahlung basierend auf einem Spektrum der gemessenen Höhen der Detektorstromimpulse ausgebildet beziehungsweise konfiguriert.

Zusätzlich oder alternativ kann das Bestimmen der Eigenschaft basierend auf der gemessenen Zählrate der Detektorstromimpulse als Zählratenbestimmungs-Betrieb bezeichnet werden. Insbesondere können im Zählratenbestimmungs-Betrieb alle Detektorstromimpulse, die über einem vorgegebenen beziehungsweise bestimmten Pulshöhenschwellwert liegen, digital ausgewertet beziehungsweise gezählt werden. Weiter zusätzlich oder alternativ kann im Zählratenbestimmungs-Betrieb eine geeignete Arbeitspunktspannung, insbesondere ein geeigneter Arbeitspunktspannungswert der Arbeitspunktspannung, im Plateau des Detektors gewählt werden.

Insbesondere kann die Eigenschaft die Zählrate, die Aktivität, insbesondere in Becquerel, eine Flächenkontamination, insbesondere in Becquerel pro Quadratzentimeter, und/oder eine, insbesondere die, Dosisleistung aufweisen oder sein.

Weiter zusätzlich oder alternativ kann das Bestimmen der Eigenschaft basierend auf dem Spektrum der gemessenen Höhen der Detektorstromimpulse als Spektrumsbestimmungs-Betrieb bezeichnet werden.

Weiter zusätzlich oder alternativ kann im Betrieb mit Gasverstärkung, insbesondere im Proportionalbereich-Betrieb, die Eigenschaft basierend auf der gemessenen Zählrate und/oder dem Spektrum der gemessenen Höhen der Detektorstromimpulse bestimmt werden.

Weiter zusätzlich oder alternativ kann die Vorrichtung eine, insbesondere die, elektronische Verstärkungseinrichtung aufweisen, wobei die elektronische Verstärkungseinrichtung zum Verstärken der Detektorstromimpulse ausgebildet sein kann.

Weiter zusätzlich oder alternativ kann der Detektorstrom zeitlich gemittelt beziehungsweise zeitlich nicht aufgelöst sein. Weiter zusätzlich oder alternativ können Detektorstromimpulse, insbesondere jeweils, zeitlich aufgelöst beziehungsweise nicht zeitlich gemittelt sein.

Weiter zusätzlich oder alternativ kann im Zählratenbestimmungs-Betrieb und/oder im Spektrumsbestimmungs-Betrieb das parallele Messen des Detektorstroms als StromMitmessung bezeichnet werden.

In einer Ausgestaltung der Erfindung ist die Betriebsarteinstelleinrichtung zum selbstständigen beziehungsweise automatischen Einstellen der Bestimmungseinrichtung zum Bestimmen der Eigenschaft der ionisierenden Strahlung in der ersten Betriebsart basierend auf dem gemessenen Detektorstrom und in der dritten Betriebsart basierend auf der gemessenen Zählrate und/oder dem Spektrum der gemessenen Höhen der Detektorstromimpulse in Abhängigkeit von dem Detektorstrom ausgebildet beziehungsweise konfiguriert.

Somit ermöglicht die Vorrichtung eine hohe Messempfindlichkeit mit einem großen dynamischen Messbereich und Übersteuerungsfestigkeit und somit einen flexiblen und sicheren Betrieb.

Im Detail kann die Vorrichtung im Strombestimmungs-Betrieb gegenüber dem Zählratenbestimmungs-Betrieb und/oder dem Spektrumsbestimmungs-Betrieb zwar eine Messung mit einer niedrigeren Empfindlichkeit, dafür jedoch eine Messung einer höheren Strahlungsintensität ermöglichen. Insbesondere kann im Zählratenbestimmungs-Betrieb und/oder im Spektrumsbestimmungs-Betrieb bei einer hohen Strahlungsintensität, insbesondere wenn die ionisierende Strahlung gepulst sein kann, die Bestimmungseinrichtung schnell übersteuert werden, und zwar schneller als im Strombestimmungs-Betrieb. Insbesondere können bei einer hohen Strahlungsintensität Totzeitverluste beziehungsweise Koinzidenzverluste auftreten. Dies kann zur Folge haben, dass im Zählratenbestimmungs-Betrieb und/oder im Spektrumsbestimmungs-Betrieb bei starkem, insbesondere steigendem, Strahlungsfeld der bestimmte Eigenschaftswert sinken kann beziehungsweise ein zu geringer oder sogar gar ein Eigenschaftswert gleich Null bestimmt werden kann. Demgegenüber kann der gemessene Detektorstrom, insbesondere immer, monoton steigend oder zumindest einen Sättigungswert anstreben, insbesondere jedoch nicht sinken.

Insbesondere kann die Betriebsarteinstelleinrichtung zum selbstständigen Einstellen der Bestimmungseinrichtung, insbesondere von dem Zählratenbestimmungs-Betrieb und/oder dem Spektrumsbestimmungs-Betrieb, insbesondere im Betrieb mit Gasverstärkung, insbesondere im Proportionalbereich-Betrieb, in den Strombestimmungs-Betrieb, insbesondere im Betrieb mit Gasverstärkung, insbesondere im Proportionalbereich-Betrieb, oder im Betrieb ohne Gasverstärkung, insbesondere im Ionisationskammer-Betrieb, bei Erreichung oder Überschreitung des ersten Stromgrenzwerts durch den gemessenen Detektorstrom ausgebildet sein. Zusätzlich oder alternativ kann die Betriebsarteinstelleinrichtung zum selbstständigen Einstellen der Bestimmungseinrichtung, insbesondere von dem Strombestimmungs-Betrieb, insbesondere im Betrieb mit Gasverstärkung, insbesondere im Proportionalbereich-Betrieb, oder im Betrieb ohne Gasverstärkung, insbesondere im Ionisationskammer-Betrieb, in den Zählratenbestimmungs-Betrieb und/oder den Spektrumsbestimmungs-Betrieb, insbesondere im Betrieb mit Gasverstärkung, insbesondere im Proportionalbereich-Betrieb, bei Unterschreitung des zweiten Stromgrenzwerts durch den gemessenen Detektorstrom ausgebildet sein.

In einer Weiterbildung der Erfindung weist die Vorrichtung eine Impulshöhenmessung der Detektorstromimpulse (B4) auf. Dies erlaubt die Aufnahme eines Impulshöhenspektrums. Dafür gibt es im Rahmen der Erfindung folgende Anwendungen:
Die erste Anwendung ist die Kalibrierung des Arbeitspunktes für die Betriebsart B1. Durch Nachregelung der Hochspannung wird der Arbeitspunkt durch Variation der Hochspannung so eingestellt, dass ein Referenzspektrum oder für den Arbeitspunkt relevante Eigenschaften des Spektrums in Gegenwart des Referenzstrahlers erreicht werden.

Eine andere Anwendung dient der Bestimmung der Dosisleistung durch unterschiedliche Wichtung von einzelnen Spektrumsbereichen, z.B. für die Bestimmung der Dosisleistung gemäß gängiger Normen zum Beispiel H*10 oder H'0,07.

Die erfindungsgemäße Vorrichtung kann sowohl zur Messung von kontinuierlicher oder gepulster Strahlung dienen.

Wie zuvor beschrieben, kann bei gepulster Strahlung die Zählrate sinken während der lonisationsstrom und/oder Signalstrom steigen kann.

Zusätzlich oder alternativ können alle Detektorstromimpulse, die über einem vorgegebenen beziehungsweise bestimmten Pulshöhenschwellwert liegen, digital ausgewertet beziehungsweise gezählt werden (Betriebsart B3). Weiter zusätzlich oder alternativ kann eine geeignete Arbeitspunktspannung, insbesondere ein geeigneter Arbeitspunktspannungswert der Arbeitspunktspannung, im Plateau des Detektors gewählt werden.

In der Betriebsart B3 kann eine gleichzeitige Messung des Detektorstromes als Strommitmessung erfolgen. Diese Strommitmessung kann zum einen ein Alarmsignal bei hohen Zählraten auslösen, wenn die Zählraten wegen Zählratenverlusten nicht mehr korrekt gemessen werden können. Zur Erweiterung des Messbereiches kann der Detektorstrom selbst als Messgröße benutzt werden. (Selbsttätiges Umschalten aus der Betriebsart B3 in die Betriebsart B1 durch die Strommitmessung.)

Weiter zusätzlich oder alternativ kann im Betrieb mit Gasverstärkung, insbesondere im Proportionalbereich-Betrieb, die Eigenschaft basierend auf dem Vergleich bestimmt werden.

Weiter zusätzlich oder alternativ kann die Vorrichtung eine, insbesondere die, elektronische Verstärkungseinrichtung aufweisen, wobei die elektronische Verstärkungseinrichtung zum Verstärken der Detektorstromstromimpulse ausgebildet sein kann.

Weiter zusätzlich oder alternativ kann der Detektorstrom zeitlich gemittelt beziehungsweise zeitlich nicht aufgelöst sein. Weiter zusätzlich oder alternativ können Detektorstromimpulse, insbesondere jeweils, zeitlich aufgelöst beziehungsweise nicht zeitlich gemittelt sein.

In einer Weiterbildung der Erfindung ist die Spannungsquelle eine, insbesondere die, einstellbare Spannungsquelle zum Anlegen einer, insbesondere der, einstellbaren Spannung zwischen der Kathodeneinrichtung und der Anodeneinrichtung. Die Vorrichtung weist eine, insbesondere elektrische, Arbeitspunkteinstelleinrichtung mit einer Referenzquelle aussendend ionisierende Referenzstrahlung auf. Die Arbeitspunkteinstelleinrichtung ist zum selbstständigen beziehungsweise automatischen Einstellen der Spannungsquelle auf einen Arbeitspunktspannungswert derart ausgebildet beziehungsweise konfiguriert, dass der durch die ionisierende Referenzstrahlung gemessene Detektorstrom einen vorgegebenen beziehungsweise festgelegten Referenzstromwert erreicht beziehungsweise aufweist, insbesondere im Betrieb mit Gasverstärkung, insbesondere im Proportionalbereich-Betrieb.

Somit ermöglicht die Vorrichtung eine genaue Messung der Strahlungseigenschaft, insbesondere im Betrieb mit Gasverstärkung, insbesondere im Proportionalbereich-Betrieb.

Insbesondere kann im Betrieb mit Gasverstärkung, insbesondere im Proportionalbereich-Betrieb, die Gasverstärkung aufgrund verschiedener Einflüsse wie Alterung, Zählgasverlust oder Temperaturschwankungen stark variieren.

Zusätzlich oder alternativ kann die Vorrichtung eine Kompensation der Abnahme der Strahlungsintensität durch Zerfall der radioaktiven Referenzquelle aufweisen. Diese Zerfallskompensation ist nur erforderlich, wenn die Arbeitspunkteistellung über die Messung des Referenzstromes durchgeführt wird. Bei der Einstellung des Arbeitspunktes über Spektrumsmessung ist eine Kompensation nicht erforderlich, da die Spektrumsform auch bei Abnahme der Aktivität der Referenzquelle erhalten bleibt. Positionierungsfehler der Referenzquelle würden sich bei der Spektrumsbestimmung im Gegensatz zu Bestimmung des Arbeitspunktes über Strommessung nicht auswirken. Weiter zusätzlich oder alternativ kann die Vorrichtung für eine definierte Detektor-Referenzquellen-Geometrie ausgebildet sein. Weiter zusätzlich oder alternativ kann die Vorrichtung zur Abschirmung von Umgebungsstrahlung ausgebildet sein.

Zusätzlich oder alternativ kann beim Kalibriervorgang die Eigenschaft des Spektrums ein Integral über das Spektrum sein. Weiter zusätzlich oder alternativ kann die Eigenschaft des Spektrums eine Spektrumsform sein. Weiter zusätzlich oder alternativ kann die Eigenschaft des Spektrums eine Lage eines Maximums im Spektrum sein. Weiter zusätzlich kann die Eigenschaft des Spektrums ein Verhältnis von Spektrumsanteilen sein. Insbesondere kann dies als Verhältnisregelung bezeichnet werden.

Weiter zusätzlich oder alternativ kann die Vorrichtung einen Analog-Digital-Umsetzer (ADC) und/oder ein Field Programmable Gate Array (FPGA) aufweisen, wobei das FPGA insbesondere zum Auswerten einer erwarteten Spektrumsform ausgebildet sein kann. Somit ermöglicht der Detektor beziehungsweise die Vorrichtung einen großen dynamischen und kalibrierten Messbereich mit einer guten Messauflösung beziehungsweise Messempfindlichkeit beziehungsweise mehrere Messbereiche jeweils mit einer geeigneten Messauflösung beziehungsweise Messempfindlichkeit.

Zusätzlich oder alternativ kann die Arbeitspunkteinstelleinrichtung nur eine einzige Referenzquelle aufweisen. In anderen Worten: die Arbeitspunkteinstelleinrichtung braucht oder kann nicht mehrere Referenzquellen aufweisen. Weiter zusätzlich oder alternativ braucht oder kann die Vorrichtung nicht für mehrere definierte Detektor-Referenzquellen-Geometrien ausgebildet sein, wenn überhaupt für nur eine einzige Detektor-Referenzquellen-Geometrie. Dies kann einen einfachen und somit kostengünstigen Aufbau der Vorrichtung ermöglichen.

In einer Ausgestaltung der Erfindung ist die Referenzquelle Natrium-22 oder Eisen-55 oder ein geeignetes anderes Isotop. Insbesondere haben/hat Natrium-22 und/oder Eisen-55, insbesondere jeweils, eine biologisch sehr kurze Halbwertszeit und somit eine sehr hohe gesetzliche Freigabegrenze. Somit kann die Referenzquelle zwar eine hohe Aktivität, jedoch unterhalb der gesetzlichen Freigabegrenze aufweisen. Dies kann einen kostengünstigen Transport der Vorrichtung ermöglichen.

In einer Weiterbildung der Erfindung weist die Vorrichtung eine ansteuerbare, insbesondere elektrische, Alarmsignal-Ausgabeeinrichtung auf. Die Alarmsignal-Ausgabeeinrichtung ist zum, insbesondere selbstständigen beziehungsweise automatischen, Ausgeben bei einer Überschreitung des Detektorstromgrenzwertes eines, insbesondere akustischen und/oder optischen, Alarmsignals ausgebildet beziehungsweise konfiguriert. Die Betriebsarteinstelleinrichtung ist zum selbstständigen beziehungsweise automatischen Ansteuern der Alarmsignal-Ausgabeeinrichtung zum Ausgeben des Alarmsignals in jeder Betriebsart ausgebildet beziehungsweise konfiguriert.

Somit ermöglicht die Vorrichtung, insbesondere die Alarmsignal-Ausgabeeinrichtung, eine Mitteilung, insbesondere wenn die Bestimmungseinrichtung übersteuert (Englisch: Overload beziehungsweise Overflow).

In einer Weiterbildung der Erfindung ist die Kathodeneinrichtung dazu ausgebildet beziehungsweise konfiguriert, im Betrieb auf Erdpotential zu liegen, beziehungsweise im Betrieb liegt die Kathodeneinrichtung auf Erdpotential. Die Anodeneinrichtung ist dazu ausgebildet beziehungsweise konfiguriert, im Betrieb auf einem gegenüber Erdpotential positiven Potential zu liegen, beziehungsweise im Betrieb liegt die Anodeneinrichtung auf dem positiven Potential.

Somit ermöglicht die Vorrichtung einen Schutz des Benutzers vor Berührung von mit Spannung verbundenen mechanischen Komponenten und/oder eine Abschirmung der Anodeneinrichtung.

Insbesondere kann die Kathodeneinrichtung die Anodeneinrichtung räumlich umgeben.

In einer Weiterbildung der Erfindung besteht die Kathodeneinrichtung teilweise oder vollständig aus Kohlenstofffasern.

Die Kathode kann auch aus einem anderen geeigneten Material wie z.B. Metall oder Kunststoff bestehen. Falls dieser nicht elektrisch leitend ist, wird die der Anode zugewandte Oberfläche mit einer Leitschicht überzogen.

Vorzugsweise ist die Kathodeneinrichtung aus einem gewebeäquivalenten oder zumindest luftäquivalenten Material. Die Durchlässigkeit des Zählrohrkörpers für niederenergetische Röntgen- oder Gammastrahlung ist umso höher, je kleiner die Ordnungszahl des verwendeten Materials ist.

Somit ermöglicht die Vorrichtung, insbesondere der Detektor, insbesondere die Kathodeneinrichtung, eine hohe mechanische Stabilität. Zusätzlich kann die Vorrichtung, insbesondere der Detektor, undurchlässig für das Zählgas und/oder durchlässig für die ionisierende Strahlung, insbesondere für niederenergetische ionisierende Strahlung, sein und/oder eine geringe Energieabhängigkeit ermöglichen.

In einer Weiterbildung der Erfindung weist der Detektor, insbesondere entweder, ein zylinderförmiges Zählrohr oder einen Großflächenzähler auf.

Insbesondere kann das Zählrohr nur einen einzigen Anodendraht aufweisen. Zusätzlich oder alternativ kann der Großflächenzähler mehrere, insbesondere parallel verlaufend angeordnete, Anodendrähte aufweisen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine erfindungsgemäße Vorrichtung zum Messen ionisierender Strahlung,
- Fig. 2a: einen Querschnitt eines zylinderförmigen Zählrohrs eines Detektors der Vorrichtung der Fig. 1,
- Fig. 2b: einen Querschnitt eines Großflächenzählers eines Detektors der Vorrichtung der Fig. 1,
- Fig. 3: ein Blockschaltbild der Vorrichtung der Fig. 1,
- Fig. 4: Strom-Spannungs-Kennlinien der Vorrichtung der Fig. 1 für verschiedene Dosisleistungen, und
- Fig. 5: ein Spektrum von mittels der Vorrichtung der Fig. 1 gemessenen Höhen von Detektorstromimpulsen.

### DETAILLIERTE BESCHREIBUNG DER AUSFÜHRUNGSBEISPIELE

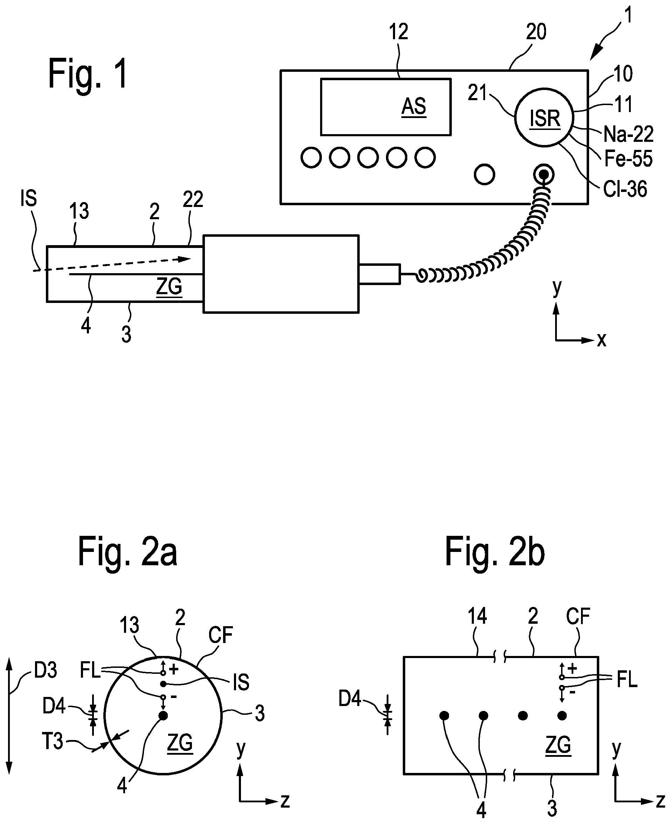

Fig. 1 bis 3 zeigen eine erfindungsgemäße Vorrichtung 1 zum Messen ionisierender Strahlung IS. Die Vorrichtung 1 weist einen Detektor 2 und eine Betriebsarteinstelleinrichtung 7 auf. Der Detektor 2 weist eine Kathodeneinrichtung 3, eine Anodeneinrichtung 4, ein Zählgas ZG, eine Spannungsquelle 5 und eine Strommesseinrichtung 6 auf. Das Zählgas ZG befindet sich und/oder ist zwischen der Kathodeneinrichtung 3 und der Anodeneinrichtung 4 zum Erzeugen von freien Ladungsträgern FL durch Gasionisierung durch die ionisierende Strahlung IS räumlich angeordnet und/oder ausgebildet. Die Spannungsquelle 5 ist zum Anlegen einer Spannung U5 zwischen der Kathodeneinrichtung 3 und der Anodeneinrichtung 4 ausgebildet. Die Strommesseinrichtung 6 ist zum Messen eines Detektorstroms I6 zwischen der Kathodeneinrichtung 3 und der Anodeneinrichtung 4 ausgebildet. Die Betriebsarteinstelleinrichtung 7 ist zum selbstständigen Einstellen der Vorrichtung 1 in eine der Betriebsarten B1, B2, B3 oder B4 in Abhängigkeit von dem gemessenen Detektorstrom I6 bei Über- oder Unterschreiten von vorgegebenen Grenzwerten ggf. mit Hysterese ausgebildet.

Des Weiteren ist die Spannungsquelle 5 eine einstellbare Spannungsquelle zum Anlegen einer einstellbaren Spannung U5 zwischen der Kathodeneinrichtung 3 und der Anodeneinrichtung 4.

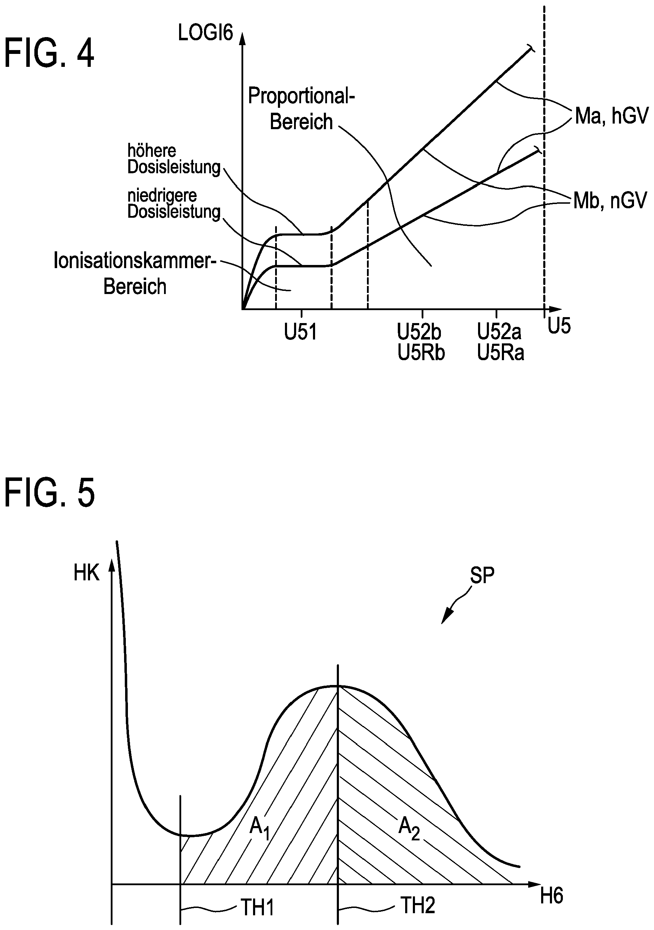

Außerdem ist die Betriebsarteinstelleinrichtung zum selbstständigen Einstellen der Spannungsquelle auf verschiedene Spannungswerte entsprechend verschiedener Gasverstärkungen in Abhängigkeit vom gemessenen Detektorstroms ausgebildet, wie in Fig. 4 gezeigt.

In Fig. 4 sind drei Spannungswerte für lonisationskammerbereich (U51), niedrige (U52b) und hohe (U52a) Gasverstärkung gezeigt. Der Spannungswert U51 ist derart, insbesondere minimal, dass die Vorrichtung 1 ohne Gasverstärkung im Ionisationskammer-Bereich ist. Im Detail ist der Spannungswert U51 in einem Bereich von 200 Volt (V) bis 400 V. Der Spannungswert U52b ist derart, dass die Vorrichtung mit einer niedrigen Gasverstärkung im Proportionalbereich ist. Der Spannungswert U52a ist derart, insbesondere maximal, dass die Vorrichtung mit einer höheren Gasverstärkung im Proportionalbereich ist. Insbesondere ist der Spannungswert U52b derart niedriger als der Spannungswert U52a, dass die niedrigere Gasverstärkung um einen Faktor 5-20, insbesondere 10, niedriger als die höhere Gasverstärkung ist. Im Detail sind die Spannungswerte U52b, U52a in einem Bereich von 1000 V bis 2000 V. Die Gasverstärkung liegt in einem Bereich bis zu 100 000. In alternativen Ausführungsbeispielen können es zwei Spannungswerte oder mehrere Spannungswerte, insbesondere mit mindestens zwei Spannungswerten zwischen dem minimalen Spannungswert ohne Gasverstärkung im Ionisationskammer-Bereich und dem Spannungswert mit maximaler Gasverstärkung im Proportionalbereich, geben.

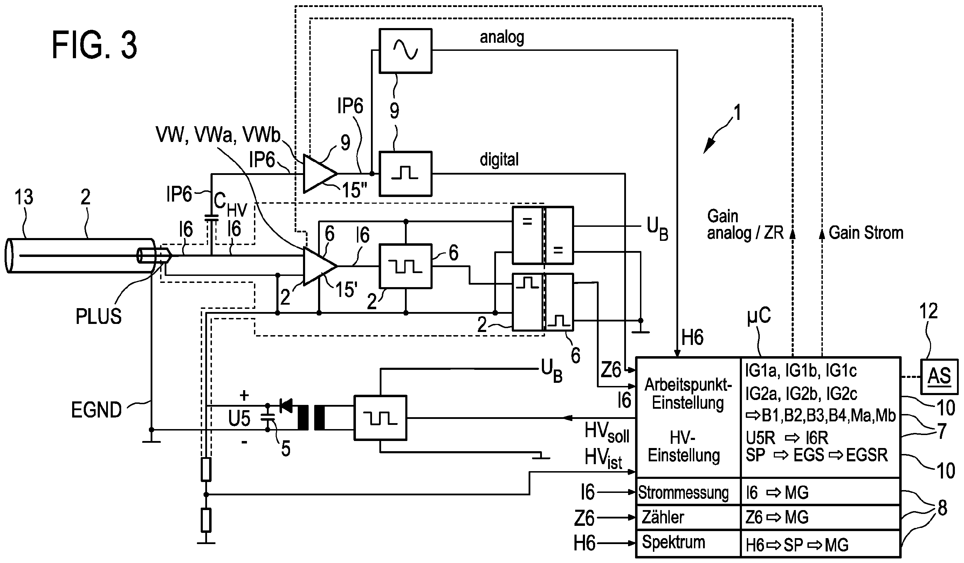

Weiter weist die Vorrichtung 1 eine Bestimmungseinrichtung 8 auf, wie in Fig. 3 gezeigt. Die Bestimmungseinrichtung 8 ist zum Bestimmen einer Eigenschaft EG der ionisierenden Strahlung IS basierend auf dem gemessenen Detektorstrom I6 ausgebildet.

Zudem weist die Vorrichtung 1 eine Stromimpulsmesseinrichtung 9 auf. Die Stromimpulsmesseinrichtung 9 ist zum Messen von Höhen H6, mit nachfolgendem Integraldiskriminator zum Messen einer Zählrate Z6 von auf Detektorstromimpulsen IP6 zwischen der Kathodeneinrichtung 3 und der Anodeneinrichtung 4 basierenden Signalstromimpulsen IP6 ausgebildet.

Zusätzlich ist die Bestimmungseinrichtung 8 zum Bestimmen einer, insbesondere der, Eigenschaft EG der ionisierenden Strahlung IS basierend auf der gemessenen Zählrate Z6 und/oder einem Spektrum SP der gemessenen Höhen H6 der Signalstromimpulse IP6 ausgebildet.

Im Detail ist eine Eigenschaft das Spektrum SP, welches eine Häufigkeit HK der gemessenen Höhen H6, insbesondere von Höhenwerten der Höhen H6, als Funktion der gemessenen Höhen H6, wie in Fig. 5 gezeigt.

In alternativen Ausführungsbeispielen kann es ausreichen, wenn die Bestimmungseinrichtung entweder zum Bestimmen basierend auf dem gemessenen Detektorstromstrom oder basierend auf der gemessenen Zählrate und/oder dem Spektrum der gemessenen Höhen der Detektorstromimpulse ausgebildet sein kann. Insbesondere braucht oder kann die Vorrichtung nicht die Stromimpulsmesseinrichtung aufweisen.

Im Detail ist im gezeigten Ausführungsbeispiel die Betriebsarteinstelleinrichtung 7 zum selbstständigen Einstellen der Bestimmungseinrichtung 8 zum Bestimmen der Eigenschaft EG der ionisierenden Strahlung IS in den Betriebsarten B1 und B2 basierend auf dem gemessenen Detektorstrom I6 und in den Betriebsarten B3 und B4 basierend auf der gemessenen Zählrate Z6 und/oder dem Spektrum SP der gemessenen Höhen H6 der Detektorstromimpulse IP6 in Abhängigkeit von dem gemessenen Detektorstrom I6 ausgebildet.

Im Detail gibt es im gezeigten Ausführungsbeispiel vier Betriebsarten B1, B2, B3, B4.

Die Betriebsart B1 arbeitet mit Gasverstärkung mit unterschiedlichen Verstärkungsfaktoren im Proportionalbereich beispielsweise bei den Spannungswerten U52a oder U52b und die Eigenschaft EG (z.B. Dosisleistung) wird basierend auf dem gemessenen Detektorstrom I6 bestimmt.

Die Betriebsart B2 arbeitet ohne Gasverstärkung im Ionisationskammer-Bereich, insbesondere bei dem Spannungswert U51, und die Eigenschaft EG wird basierend auf dem gemessenen Detektorstrom I6 bestimmt.

Die Betriebsart B3 arbeitet mit der höheren Gasverstärkung im Proportionalbereich, insbesondere bei dem Spannungswert U52a, und die Eigenschaft EG wird basierend auf der gemessenen Zählrate Z6 der Detektorstromimpulse IP6 bestimmt.

Die Betriebsart B4 arbeitet mit der höheren Gasverstärkung im Proportionalbereich, insbesondere bei dem Spannungswert U52a, und die Eigenschaft EG wird basierend auf dem Spektrum SP der gemessenen Höhen H6 der Detektorstromimpulse IP6 bestimmt.

In alternativen Ausführungsbeispielen braucht die Vorrichtung, insbesondere der Detektor, nicht alle Betriebsarten aufweisen beziehungsweise nicht zu allen Betriebsarten ausgebildet zu sein beziehungsweise nicht in allen Betriebsarten betrieben werden zu können.

Die Betriebsart B1 arbeitet in verschieden kalibrierten Messbereiche Ma, Mb oder weiteren. Ist die aktive Betriebsart beispielsweise B1, Ma (maximale Empfindlichkeit) so kann die Vorrichtung automatisch in die Messbereiche B1, Mb, ... oder in die Betriebsart B2 umschalten.

Ist in einem weiteren Ausführungsbeispiel die gewählte Betriebsart B3 oder B4, so kann die Vorrichtung bei Erreichen eines vorgegebenen Grenzwertes der Detektorstromimpulse automatisch in eine der Messbereiche der Betriebsart B1 und bei noch höherem Detektorstrom in die Betriebsart B2 umschalten.

Des Weiteren sind die Betriebsarten B2 oder unempfindliche Messbereiche der Betriebsart B1 für hohe Strahlungsintensitäten, insbesondere gepulste ionisierende Strahlung IS, geeignet, nicht jedoch die Betriebsarten B3, B4. Insbesondere kann die Betriebsart B2 gegenüber den Betriebsarten B3, B4 eine Messung von Strahlungsintensitäten um zwei Größenordnungen beziehungsweise einen Faktor 100 höher ermöglichen. Bei niedrigen Strahlungsintensitäten, insbesondere bei nicht-gepulster ionisierender Strahlung IS weisen die Betriebsarten B3, B4 die höchste Messempfindlichkeit auf.

Außerdem ist im gezeigten Ausführungsbeispiel die Bestimmungseinrichtung 8 zum Vergleichen der gemessenen Zählrate Z6 und/oder des Spektrums SP der gemessenen Höhen H6 der Detektorstromimpulse IP6 mit dem gemessenen Detektorstrom I6 und zum Bestimmen der Eigenschaft EG (z.B. Dosisleistung) der ionisierenden Strahlung IS basierend auf dem Vergleich ausgebildet.

In alternativen Ausführungsbeispielen braucht oder kann die Bestimmungseinrichtung nicht zum Vergleichen und zum Bestimmen basierend auf dem Vergleich ausgebildet sein.

Weiter weist die Vorrichtung 1 eine Arbeitspunkteinstelleinrichtung 10 mit einer Referenzquelle 11, welche ionisierende Referenzstrahlung ISR aussendet, auf wie in Fig. 1 und 3 gezeigt.

Im Detail ist die Arbeitspunkteinstelleinrichtung 10 zum selbstständigen Einstellen der Spannungsquelle 5, insbesondere der Spannung U5, auf einen Arbeitspunktspannungswert U5R derart ausgebildet, dass der durch die ionisierende Referenzstrahlung ISR gemessene Detektorstrom I6 einen vorgegebenen Referenzstromwert I6R erreicht, insbesondere im Betrieb mit Gasverstärkung, insbesondere im Proportionalbereich-Betrieb, wie in Fig. 4 gezeigt.

Zusätzlich ist die Arbeitspunkteinstelleinrichtung 10 zum selbstständigen Einstellen der Spannungsquelle 5, insbesondere der Spannung U5, auf einen, insbesondere den, Arbeitspunktspannungswert U5R derart ausgebildet, dass eine Eigenschaft eines, insbesondere des, Spektrums SP der durch die ionisierende Referenzstrahlung gemessenen Höhen H6 der Detektorstromimpulse IP6 einen vorgegebenen Referenzspektrumswert erreicht, insbesondere im Betrieb mit Gasverstärkung, insbesondere im Proportionalbereich-Betrieb, wie in Fig. 5 gezeigt.

Im Detail zeigt Fig. 5 qualitativ das Pulshöhenspektrum SP, das sich z. B. mit einem Radionuklid im korrekten Arbeitspunktspannungswert U5 ergibt. Im gezeigten Ausführungsbeispiel wird zur korrekten Einstellung des Arbeitspunktspannungswertes U5R die Spannung U5 so verändert beziehungsweise variiert, dass die Spektrumsanteile A1 und A2, insbesondere die Integrale über Teile des Spektrums SP, unter der Annahme der immer gleichen Spektrumsform ein vorher definiertes Verhältnis ergeben, den vorgegebenen Referenzspektrumswert EGSR: A2/(A1+A2) = konstant = EGS. Die Schwelle TH1 trennt unerwünschte Stör- und Rauschanteile ab (unterhalb A1). Die energetisch höher liegende Schwelle TH2 trennt den oberen Signalanteil A2 ab. In alternativen Ausführungsbeispielen kann die Eigenschaft des Spektrums eine Lage eines eindeutigen Maximums im Spektrum sein, in Fig. 5 die Schwelle TH2.

In alternativen Ausführungsbeispielen kann es ausreichen, wenn die Arbeitspunkteinstelleinrichtung entweder zum Einstellen derart, dass der gemessene lonisationsstrom und/oder Signalstrom den vorgegebenen Referenzstromwert erreicht, oder zum Einstellen derart, dass die Eigenschaft des Spektrums der gemessenen Höhen der lonisationsstromimpulse und/oder Signalstromimpulse den vorgegebenen Referenzspektrumswert erreicht, ausgebildet sein kann.

Zudem weist die Vorrichtung 1 eine einstellbare elektronische Verstärkungseinrichtung 15', 15" auf, wie in Fig. 3 gezeigt. Die elektronische Verstärkungseinrichtung 15', 15" ist zum Verstärken des Detektorstroms I6 und/oder der Detektorstromimpulse IP6 mit einem einstellbaren Verstärkungswert VW ausgebildet. Die Arbeitspunkteinstelleinrichtung 10 ist zum selbstständigen Einstellen der Verstärkungseinrichtung 15', 15" auf einen ersten Verstärkungswert VWa und zum selbstständigen Einstellen der Spannungsquelle 5, insbesondere des Spannungswerts U52a, auf einen ersten Arbeitspunktspannungswert U5Ra zur Erreichung des Referenzstromwerts I6R und/oder des Referenzspektrumswerts EGSR bei dem ersten Verstärkungswert VWa ausgebildet. Des Weiteren ist die Arbeitspunkteinstelleinrichtung 10 zum selbstständigen Einstellen der Verstärkungseinrichtung 15', 15" auf einen gegenüber dem ersten höheren, zweiten Verstärkungswert VWb und zum selbstständigen Einstellen der Spannungsquelle 5, insbesondere des Spannungswerts U52b, auf einen gegenüber dem ersten niedrigeren, zweiten Arbeitspunktspannungswert U5Rb zur Erreichung des Referenzstromwerts I6R und/oder des Referenzspektrumswerts EGSR bei dem zweiten Verstärkungswert VWb ausgebildet.

Insbesondere ist der erste Verstärkungswert VWa um einen Faktor 5-20, insbesondere 10, niedriger als der zweite Verstärkungswert VWb. In alternativen Ausführungsbeispielen kann es mindestens drei Verstärkungswerte und entsprechend mindestens drei Arbeitspunktspannungswerte geben.

Im Detail kann die Gleichung gelten: (primärer lonisationsstrom mit Referenzquelle) x (Gasverstärkung) x (elektronische Verstärkung) = Referenzstromwert. Allgemein kann die Gleichung gelten: (lonisationsstrom) x (Gasverstärkung) x (elektronische Verstärkung) = Detektorstrom. Entsprechendes kann bei dem Spektrum der gemessen Höhen der Detektorstromimpulse gelten, insbesondere wobei anstatt des Stroms beispielsweise das Integral über das Spektrum bezüglich der Impulshöhen eingesetzt werden kann.

Des Weiteren weist die Referenzquelle 11 beispielsweise Na-22 und/oder Fe-55 und/oder CI-36 auf wie in Fig. 1 gezeigt.

Außerdem ist die Vorrichtung 1 für eine definierte Detektor-Referenzquellen-Geometrie ausgebildet. Im Detail weist der Detektor 2 eine Sonde 22 aufweisend die Kathodeneinrichtung 3, die Anodeneinrichtung 4 und das Zählgas ZG auf. Die Vorrichtung 1 weist ein Gehäuse 20 mit einer Öffnung 21 zum Einstecken der Sonde 22 auf. Hinter der Öffnung 21 ist die die Referenzquelle 11, räumlich angeordnet.

Nach Entfernung beziehungsweise Herausziehen der Sonde 22 aus der Öffnung 21 kann die eigentliche beziehungsweise normale Messung, wie zuvor beschrieben, beginnen oder fortgeführt werden.

Im Detail weist die Vorrichtung 1 einen Mikrokontroller auf, wobei der Mikrokontroller einen Teil der Betriebsarteinstelleinrichtung 7, einen Teil der Bestimmungseinrichtung 8 und einen Teil der Arbeitspunkteinstelleinrichtung 10 aufweist. In anderen Worten: die Betriebsarteinstelleinrichtung 7, die Bestimmungseinrichtung 8 und die Arbeitspunkteinstelleinrichtung 10 sind neben anderen Einstelleinrichtungen in der Mikrokontroller-Einrichtung untergebracht.

Weiter weist die Vorrichtung 1 eine ansteuerbare Alarmsignal-Ausgabeeinrichtung 12 auf. Die Alarmsignal-Ausgabeeinrichtung 12 ist zum Ausgeben eines, insbesondere akustischen und/oder optischen, Alarmsignals AS ausgebildet. Die Betriebsarteinstelleinrichtung 7 ist zum selbstständigen Ansteuern der Alarmsignal-Ausgabeeinrichtung 12 zum Ausgeben des Alarmsignals AS in Abhängigkeit von dem gemessenen Detektorstrom I6 ausgebildet.

Des Weiteren ist die Kathodeneinrichtung 3 dazu ausgebildet, im Betrieb auf Erdpotential EGND zu liegen, beziehungsweise im Betrieb liegt die Kathodeneinrichtung 3 auf Erdpotential EGND, wie in Fig. 3 gezeigt. Die Anodeneinrichtung 4 ist dazu ausgebildet, im Betrieb auf einem gegenüber Erdpotential EGND positiven Potential PLUS zu liegen, beziehungsweise im Betrieb liegt die Anodeneinrichtung 4 auf dem positiven Potential PLUS.

Im Detail liegen im Betrieb die gestrichelt umrandeten Schaltungsteile auf dem positiven Potential PLUS. Insbesondere wird der Detektorstrom I6 auf dem positiven Potential-Niveau abgenommen. Die Abkopplung von den lonisationsstromimpulsen IP6 auf dem positiven Potential-Niveau erfolgt über eine kapazitive Kopplung.

Außerdem besteht die Kathodeneinrichtung 3 teilweise oder vollständig aus Kohlenstofffasern CF.

Im Detail hat die Kathodeneinrichtung 3 eine Wandstärke T3 von 0,1 Millimeter (mm) bis 2 mm, insbesondere 1,5 mm.

In einer Weiterbildung der Erfindung weist der Detektor, insbesondere entweder, ein zylinderförmiges Zählrohr 13, wie in Fig. 2a gezeigt, oder einen Großflächenzähler 14, wie in Fig. 2b gezeigt, auf.

Im Detail umgibt die Kathodeneinrichtung 3 die Anodeneinrichtung 4 räumlich.

Weiter weist das zylinderförmige Zählrohr 13 nur einen einzigen Anodendraht 4 auf. Der Großflächenzähler 14 weist mehrere, insbesondere elektrisch parallel geschaltete und parallel verlaufend angeordnete, Anodendrähte 4 auf. Insbesondere weist/weisen der Anodendraht/die Anodendrähte 4, insbesondere jeweils, einen Durchmesser D4 von 40 Mikrometer (µm) bis 80 µm, insbesondere 60 µm, auf. Zusätzlich oder alternativ besteht/bestehen der Anodendraht/die Anodendrähte 4, insbesondere jeweils, teilweise oder vollständig aus Wolfram.

Im Detail ist das zylinderförmige Zählrohr 13 an beiden Stirnseiten verschlossen. Des Weiteren ist bei dem zylinderförmigen Zählrohr 13 die Kathodeneinrichtung 3 zylinderförmig ausgebildet. Insbesondere weist das zylinderförmigen Zählrohr 13 beziehungsweise die Kathodeneinrichtung 3 einen Durchmesser D3 von 15 mm bis 35 mm, insbesondere 25 mm, auf. Zusätzlich oder alternativ ist die Kathodeneinrichtung 13 die Rohrwand. Der Anodendraht 4 befindet sich beziehungsweise ist in der Längsachse beziehungsweise Mittelachse des Zylinders gespannt und wird an einem Ende durch einen Isolator, insbesondere Keramik, aus dem Zählrohr 13 herausgeführt. Als Zählgas ZG ist beispielsweise Isobutan geeignet.

Insbesondere kann das zylinderförmige Zählrohr 13 zur Dosisleistungsmessung für Gamma- und/oder Röntgenstrahlung verwendet werden.

Im Detail ist die Vorrichtung 1 zur Dosisleistungsmessung für Gamma- und/oder Röntgenstrahlung dazu ausgebildet, in allen vier Betriebsarten betrieben zu werden.

Im Detail weist der Großflächenzähler 14 drei Ebenen auf, wobei in Fig. 2b eine mittlere der drei Ebenen gezeigt ist. Eine vordere der drei Ebenen wird durch ein sehr dünnes Fenster aus metallisierter Kunststofffolie, insbesondere für einen Gasdurchfluss-Zähler, oder Titan, insbesondere für einen gasdichten Zähler mit permanenter Gasfüllung, gebildet. Die Innenseite des Fensters ist geerdet. Die mittlere der drei Ebenen wird durch die mehreren Anodendrähte 4 gebildet. Eine hintere der drei Ebenen wird durch eine elektrisch leitende Rückwand gebildet, die ebenfalls geerdet ist. Insbesondere beträgt die aktive Detektorfläche mehrere hundert Quadratzentimeter.

Insbesondere kann der Großflächenzähler 14 zur Messung radioaktiver Kontaminationen von Oberflächen oder Personen verwendet werden, beispielsweise mit Hand-Fuß-Monitoren oder Ganzkörpermonitoren.

Im Detail ist die Vorrichtung 3 gemäß Fig. 2b zur Flächenkontaminationsmessung dazu ausgebildet, in der Betriebsart B3, insbesondere Einzelimpulszählung, betrieben zu werden. Zusätzlich ist die Vorrichtung 3 zur Kontaminationsmessung dazu ausgebildet, bei Erreichung oder Überschreitung des Stromgrenzwerts durch den gemessenen Detektorstrom I6 von der Betriebsart B3 in die Betriebsart/en B1 oder B2 umgestellt zu werden und/oder das Alarmsignal AS auszugeben.

Insbesondere braucht oder kann eine Arbeitspunktspannungseinstellung, wie zuvor beschrieben, nicht erfolgen. Die Arbeitspunkteinstellung erfolgt hier über die Aufnahme einer Plateau kurve.

Wie die gezeigten und oben erläuterten Ausführungsbeispiele deutlich machen, stellt die Erfindung eine vorteilhafte Vorrichtung zum Messen ionisierender Strahlung bereit, die gegenüber dem Stand der Technik verbesserte Eigenschaften aufweist, insbesondere einen einfachen und somit kostengünstigen Aufbau und zugleich einen, insbesondere flexiblen und/oder sicheren, Betrieb in Abhängigkeit der ionisierenden Strahlung ermöglicht.

## Patentansprüche

1. Vorrichtung (1) zum Messen ionisierender Strahlung (IS), aufweisend:
- einen Detektor (2) aufweisend:
- eine Kathode (3),
- eine Anode (4),
- ein Zählgas (ZG) zwischen der Kathode (3) und der Anode (4) zum Erzeugen von Gasionisierung durch ionisierende Strahlung (IS),
- eine Spannungsquelle (5) zum Anlegen einer Spannung (U5) zwischen der Kathode (3) und der Anode (4), und
- eine Strommesseinrichtung (6) zum Messen eines im Zählgas (ZG) durch die ionisierende Strahlung (IS) erzeugten Detektorstroms (I6) zwischen der Kathode (3) und der Anode (4), und
- eine Einstelleinrichtung (7),
- wobei die Einstelleinrichtung (7) zum selbstständigen Einstellen der Vorrichtung (1) in unterschiedliche Betriebsarten (B1, B2, B3, B4) in Abhängigkeit von dem gemessenen Detektorstrom (I6) ausgebildet ist, und/oder
- wobei die Einstelleinrichtung (7) zum selbstständigen Einstellen der Vorrichtung (1) in unterschiedliche Messbereiche (Ma, Mb) in Abhängigkeit von dem gemessenen Detektorstrom (I6) ausgebildet ist.

2. Vorrichtung (1) nach Anspruch 1, **dadurch gekennzeichnet, dass**
- die Einstelleinrichtung (7) dazu ausgebildet ist, die unterschiedlichen Betriebsarten (B1, B2, B3, B4) und/oder die unterschiedlichen Messbereiche (Ma, Mb) in Abhängigkeit davon einzustellen, ob der gemessene Detektorstrom (I6) einen ersten Schwellenwert (IG1) überschreitet oder einen zweiten Schwellenwert (IG2) unterschreitet.

3. Vorrichtung (1) nach Anspruch 1 oder 2, **dadurch gekennzeichnet, dass**
- die unterschiedlichen Betriebsarten eine erste Betriebsart (B1) aufweisen, bei welcher der Detektor (2) mit Gasverstärkung (GV) arbeitet, und eine zweite Betriebsart (B2) aufweisen, bei welcher der Detektor (2) ohne Gasverstärkung arbeitet.

4. Vorrichtung (1) nach Anspruch 3, **dadurch gekennzeichnet, dass**
- in der ersten Betriebsart (B1) ein erster Messbereich (Ma) mit hoher Gasverstärkung (hGV) einstellbar ist und weitere Messbereiche (Mb) mit niedrigerer Gasverstärkung (nGV) einstellbar sind.

5. Vorrichtung (1) nach einem der vorhergehenden Ansprüche, **dadurch gekennzeichnet, dass**
- ein Umschalten zwischen unterschiedlichen Betriebsarten (B1, B2, B3, B4) und/oder ein Umschalten zwischen unterschiedlichen Messbereichen (Ma, Mb) durch Veränderung der angelegten Spannung (U5) zwischen der Kathode (3) und der Anode (4) bewirkt wird.

6. Vorrichtung (1) nach einem der vorhergehenden Ansprüche, **dadurch gekennzeichnet, dass**
- die Vorrichtung (1) eine Messgrößenbestimmungseinrichtung (8) aufweist, die dazu ausgebildet ist, eine Messgröße (MG) basierend auf dem gemessenen Detektorstrom (I6) zu bestimmen, und/oder
- die Vorrichtung (1) eine Messgrößenbestimmungseinrichtung (8) aufweist, die dazu ausgebildet ist, eine Messgröße (MG) zu bestimmen, und die Einstelleinrichtung (7) dazu ausgebildet ist, das Bestimmen der Messgröße (MG) in Anhängigkeit von dem gemessenen Detektorstrom (I6) zu überwachen.

7. Vorrichtung (1) nach einem der vorhergehenden Ansprüche, **dadurch gekennzeichnet, dass**
- die unterschiedlichen Betriebsarten eine dritte Betriebsart (B3) aufweisen, bei welcher der Detektor (2) mit Gasverstärkung (GV) arbeitet und eine Messgröße (MG) basierend auf einer Zählrate (Z6) von mittels des Detektors (2) erzeugten Impulsen (IP6) bestimmt wird.

8. Vorrichtung (1) nach einem der vorhergehenden Ansprüche, **dadurch gekennzeichnet, dass**
- die unterschiedlichen Betriebsarten eine vierte Betriebsart (B4) aufweisen, bei welcher der Detektor (2) mit Gasverstärkung (GV) arbeitet und eine Messgröße (MG) basierend auf einem Impulshöhenspektrum (SP) von mittels des Detektors (2) erzeugten Impulsen (IP6) bestimmt wird.

9. Vorrichtung (1) nach einem der vorhergehenden Ansprüche, **dadurch gekennzeichnet, dass**
die Vorrichtung (1) eine Arbeitspunkteinstelleinrichtung (10) mit einer Referenzquelle (11) aussendend ionisierende Referenzstrahlung (ISR) aufweist, wobei die Arbeitspunkteinstelleinrichtung (10) dazu ausgebildet ist, die angelegte Spannung (U5) zwischen der Kathode (3) und der Anode (4) derart auf einen Arbeitspunktspannungswert (U5R) einzustellen,
- dass der durch die ionisierende Referenzstrahlung (ISR) gemessene Detektorstrom (I6) einen vorgegebenen Referenzstromwert (I6R) erreicht, und/oder
- dass eine Eigenschaft (EGS) eines durch die ionisierende Referenzstrahlung (ISR) gemessenen Impulshöhenspektrums (SP) von mittels des Detektors (2) erzeugten Impulsen (IP6) einen vorgegebenen Referenzspektrumswert (EGSR) erreicht.

10. Vorrichtung (1) nach Anspruch 9, **dadurch gekennzeichnet, dass**
- die Vorrichtung (1) eine einstellbare elektronische Verstärkungseinrichtung (15', 15") aufweist, die dazu ausgebildet ist, mit einem elektronischen Verstärkungswert (VW) elektronisch zu verstärken, und die Arbeitspunkteinstelleinrichtung (10) zur Kalibrierung von einem oder mehreren Messbereichen (Ma, Mb) im Proportionalbereich dazu ausgebildet ist,
- das elektronische Verstärken mit einem ersten elektronischen Verstärkungswert (VWa) einzustellen und die angelegte Spannung (U5) derart auf einen ersten Arbeitspunktspannungswert (U5Ra) für einen ersten Messbereich (Ma) mit hoher Gasverstärkung (hGV) einzustellen, dass der gemessene Detektorstrom (I6) den Referenzstromwert (I6R) erreicht und/oder eine geeignete Eigenschaft (EGSR) eines Referenzspektrums erreicht wird, und
- das elektronische Verstärken gegenüber dem ersten auf weitere höhere elektronische Verstärkungswerte (VWb) einzustellen und die angelegten Spannungen (U5) derart auf gegenüber dem ersten weitere niedrigere, Arbeitspunktspannungswerte (U5Rb) für weitere Messbereiche (Mb) mit niedrigerer Gasverstärkung (nGV) einzustellen, dass der gemessene Detektorstrom (I6) den Referenzstromwert (I6R) erreicht und/oder eine geeignete Eigenschaft (EGSR) eines Referenzspektrums erreicht wird.

11. Vorrichtung (1) nach Anspruch 9 oder 10, **dadurch gekennzeichnet, dass**
- die Referenzquelle (11) Natrium-22 (Na-22) und/oder Eisen-55 (Fe-55) und/oder Chlor-36 (CI-36) aufweist.

12. Vorrichtung (1) nach einem der vorhergehenden Ansprüche, **dadurch gekennzeichnet, dass**
- die Vorrichtung (1) eine steuerbare Alarmsignal-Ausgabeeinrichtung (12) aufweist, die dazu ausgebildet ist, ein Alarmsignal (AS) auszugeben, und die Einstelleinrichtung (7) dazu ausgebildet ist, das Ausgeben des Alarmsignals in Abhängigkeit von dem gemessenen Detektorstrom (I6) zu steuern.

13. Vorrichtung (1) nach einem der vorhergehenden Ansprüche, **dadurch gekennzeichnet, dass**
- die Kathode (3) dazu ausgebildet ist, im Betrieb auf Erdpotential (EGND) zu liegen, und
- wobei die Anode (4) dazu ausgebildet ist, im Betrieb auf einem gegenüber Erdpotential (EGND) positiven Potential (PLUS) zu liegen.

14. Vorrichtung (1) nach einem der vorhergehenden Ansprüche, insbesondere nach Anspruch 3 oder 4, **dadurch gekennzeichnet, dass**
- in der zweiten Betriebsart (B2) ein Zähldraht oder Zähldrähte die Kathode (3) ist/sind und eine Zählrohrwand die Anode (4) ist.

15. Vorrichtung (1) nach einem der vorhergehenden Ansprüche, **dadurch gekennzeichnet, dass**
- die Kathode(3) teilweise oder vollständig aus Kohlenstofffasern (CF) besteht, und/oder
- der Detektor (2) ein zylinderförmiges Zählrohr (13) oder einen Großflächenzähler (14) aufweist.
